Europäisches Patentamt

European Patent Office

Office européen des brevets

(19)

(11) Publication number: **0 113 057**
**B1**

(12) **EUROPEAN PATENT SPECIFICATION**

(45) Date of publication of patent specification: **04.06.86**

(21) Application number: **83112001.9**

(22) Date of filing: **30.11.83**

(51) Int. Cl.⁴: **G 09 F 11/30, G 03 D 15/10**

(54) **Picture viewer.**

(30) Priority: **13.12.82 DE 3246101**

(43) Date of publication of application:
**11.07.84 Bulletin 84/28**

(45) Publication of the grant of the patent:
**04.06.86 Bulletin 86/23**

(84) Designated Contracting States:
**DE FR GB IT NL SE**

(56) References cited:
**DE-A-2 212 135**
**DE-B-1 772 198**
**DE-B-2 742 345**
**US-A-4 057 920**
**US-A-4 173 838**
**US-A-4 241 529**
**US-A-4 245 417**
**US-A-4 259 802**

(73) Proprietor: **Licinvest AG**
**Hartbertstrasse 9**
**CH-7002 Chur (CH)**

(72) Inventor: **Ackeret, Peter**
**Allmendstrasse 18**
**CH-8700 Küsnacht (CH)**

(74) Representative: **Dipl.-Ing. H. Marsch Dipl.-Ing. K.**
**Sparing Dipl.-Phys.Dr. W.H. Röhl Patentanwälte**
**Rethelstrasse 123**
**D-4000 Düsseldorf (DE)**

Courier Press, Leamington Spa, England.

## Description

The present invention relates to a picture viewer, in particular a photo print viewer.

US patent specifications 4.245.417, 4.241.529, and 4.259.802 each disclose a picture viewer comprising a housing with a viewing window and a slider reciprocable out of and into the housing parallel to the window. With the slider pushed fully home, the uppermost picture of a stack of pictures is presented beneath the window, the stack being urged against the window by bias means. When the slider is withdrawn, the uppermost or lowermost picture of the stack is separated therefrom, and when the slider is returned into the housing, the separated picture is added to the stack again but at the other end thereof, i.e. the previously uppermost picture becomes the lowermost, or vice versa. In this manner, a cyclic exchange of the picture presented at the window is caused by repeated slider reciprocation strokes.

Means to implement this exchange comprise in general two elements: A first, retentive element is adapted to engage the one picture to be separated, this engagement occurring preferably at the exposed surface of the picture. This retentive element is provided either in the housing or in the slider. The respective other member — slider or housing — has a separator bar extending across the stack of pictures but leaving gaps between bar and housing window and between bar and the housing wall opposite its window, respectively. Such gaps permit passage of the separated picture; upon withdrawal of the slider, this picture passes through one gap, and in order to reach the other end of the stack, it must pass through the other gap when the slider is pushed back into the housing. It is consequently necessary that the adjacent end edge of the separated picture, when the slider is fully withdrawn, must have come free of the separator bar so that it may be moved across the latter.

Accordingly, with the slider fully withdrawn, the one separated picture will be in the slider (or the housing) while the remaining stack will be in the housing (or the slider). The handling of the viewer by the user will frequently cause abrupt motions, and the separated picture which, as long as it formed part of the stack, was supported by lateral walls of the housing (or the slider), when subjected to accelerations may become misaligned with respect to the stack. In such a case, an attempt of the user to push the slider back home, involves the risk that the — then — leading edge of the separated picture, instead of "climbing" along the separator bar, will be engaged by an adjacent end face and the exchange mechanism will be blocked, or even worse, the picture will be upset and bulged.

It is, accordingly, an object of the present invention to improve the picture viewer of the design described above with reference to publications such that this risk is minimized or eliminated.

According to the invention, this will be achieved by means adapted to hold the separated picture in alignment with the "passage path" of the separator bar, such means either supporting the picture laterally or clamping it in its position prior to its having become totally free.

In the following description of embodiments, an attempt has been made to simplify the specification in that many details provided for proper function of the viewer are neither illustrated nor described. Such features form the subject of the US patent specifications referred to above. In particular, various types of retentive elements are disclosed in US patent specification 4.259.802; details of separator bars are disclosed in US patent specification 4.241.529, and preferred designs of sliders are disclosed in US patent specification 4.245.417. The disclosure of these publications is therefore included by reference.

Embodiments of picture viewers according to the invention are illustrated in the accompanying drawings and will be described in detail hereunder.

Fig. 1 is a top plan view, partly in section, of a first embodiment,

Fig. 2 is a section view along lines 2—2 of Fig. 1,

Fig. 3 illustrates a detail of modification of the first embodiment,

Fig. 4 is an isometric view of a component shown in Fig. 3,

Fig. 5 shows in a manner analog to Fig. 1 a further embodiment,

Fig. 6 is a section view along lines 6—6 of Fig. 5,

Fig. 7 is a section along lines 7—7 in Fig. 5,

Fig. 8 shows in a manner analog to Fig. 1 a third embodiment,

Fig. 9 illustrates a detail of a modification of the third embodiment,

Fig. 10 shows in a manner analog to Fig. 1 a fourth embodiment,

Fig. 11 illustrates the picture viewer of Fig. 10 in closed status, partly broken away,

Fig. 12 is a part section view along lines 12—12 of Fig. 11,

Fig. 13 shows in a manner analog to Fig. 1 a fifth embodiment, partly broken away,

Fig. 14 is a section view along lines 14—14 of Fig. 13, and

Fig. 15 shows in a manner analog to Fig. 14 the picture viewer in closed status.

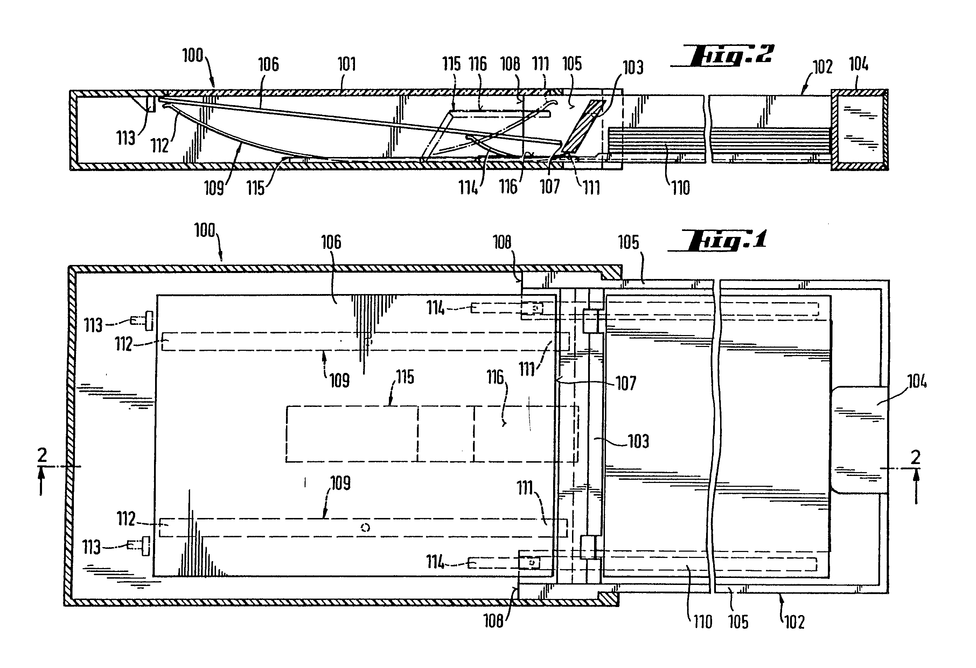

The picture viewer of Fig. 1 and 2 comprises a housing 100 and a drawer or slider 102 longitudinally moveably mounted in the housing; Fig. 1 and 2 illustrate the slider in its fully withdrawn position. The slider has a separator bar 103 and a grip portion 104. Housing 100 has a viewing window 101.

The slider is of generally frame-like configuration with lateral walls 105, and the innermost ends of these walls 105 extend beyond separator bar 103 and engage laterally the edges of a picture 106 even after the bar 103 having come clear of picture edge 107 with the slider fully withdrawn. Thus, when the slider is pushed home, edge 107 cannot collide with the inner end 108 of either one of slider walls 105. The two leaf springs 109 urge the stack of pictures 110 against window 101 once the slider is fully pushed home into housing 100. With the slider withdrawn, the front ends 111 of the springs are suppressed by separator bar 103 while the rear ends 112 of the springs urge the rear end of separated picture 106 against the window in front of stop members 113 provided at housing 100. In Fig. 2, the shape of the front ends of the springs 109 is indicated in dashed lines, shape the springs tend to assume with the slider pushed into the housing so that the suppression bar 103 has ceased.

Two small auxiliary leaf springs 114 are mounted on the bottom wall of housing 100, and their free ends may yield as shown in Fig. 2 when slider 102 is pulled out of housing 100 so to lift edge 107 of picture 106 slightly from the housing bottom. This edge will now confront the rear bevel of separator bar 103 and will safely slide along the latter when the slider is pushed inwards.

A retentive element 115 is indicated to be disposed on the housing bottom. It comprises a pivotable spring-biased support with an adhesive coating 116 adapted to retain the lowermost picture of the picture stack in the housing while all the other pictures thereof are carried away by the slider upon its withdrawal.

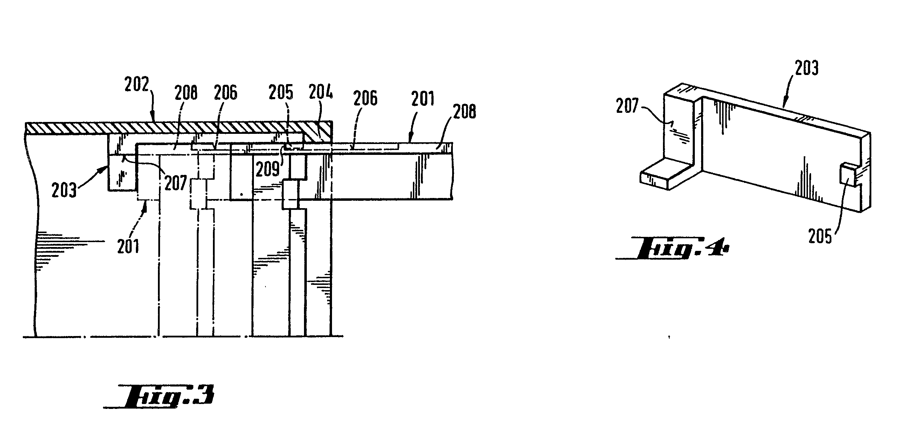

It will be noted that the design of Fig. 1 and 2 necessitates the prolongation of the housing beyond the dimension otherwise dictated by the size of the pictures because when the slider is in the housing, the wall extensions thereof must be accommodated. The design may be improved as illustrated in Fig. 3 and 4 wherein Fig. 3 shows the modified design of the slider side wall extension in cooperation with the housing opening.

The housing 202 is provided with inwardly protruding stop members 204 (such stop members are also provided in the design of Fig. 1 and 2 but there without reference numerals) adjacent its opening. Slider 201 has extensions 203 but these are not integral parts of side walls 208 as was the case in the first embodiment but are slideably received between these side walls and the parallel housing side walls. With the slider pushed home into the housing, extensions 203 will assume the position shown in solid lines in Fig. 3. Upon withdrawal, near the ends of the slider stroke, the leading edge of each extension will engage a respective stop member 204 while slider 201 can still be further pulled out, a protuberance 205 of each extension sliding in a respective groove 206 of the respective side wall 208. The slider stroke will then definitely be limited by engagement of protuberance 205 at the end edge 209 of groove 206, the extensions then assuming with respect to the slider a position indicated in dashed lines so that they will perform the same function as described above with reference to Fig. 1 and 2, surface 207 of the extension engaging the separated picture (not shown).

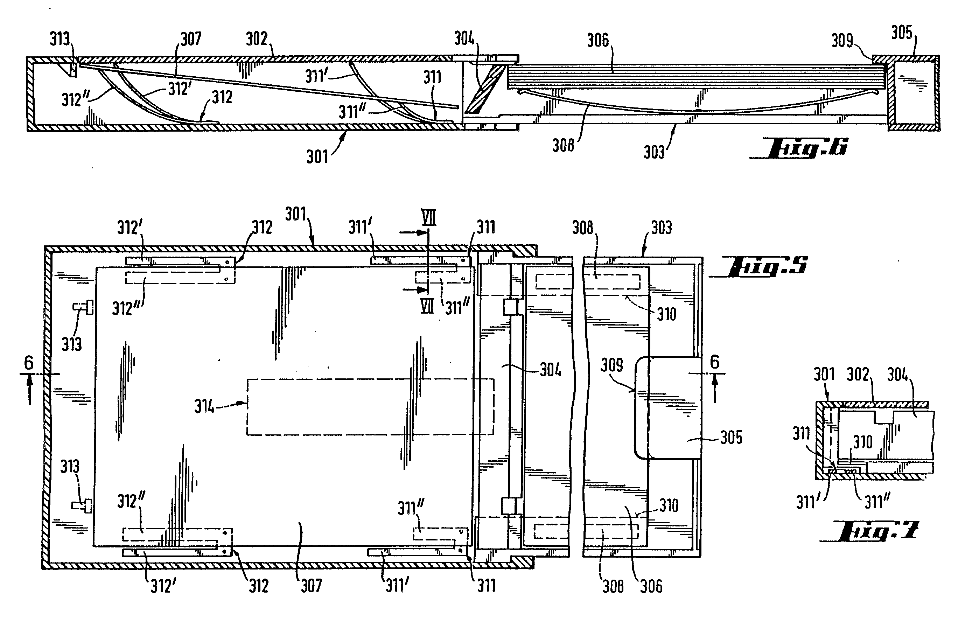

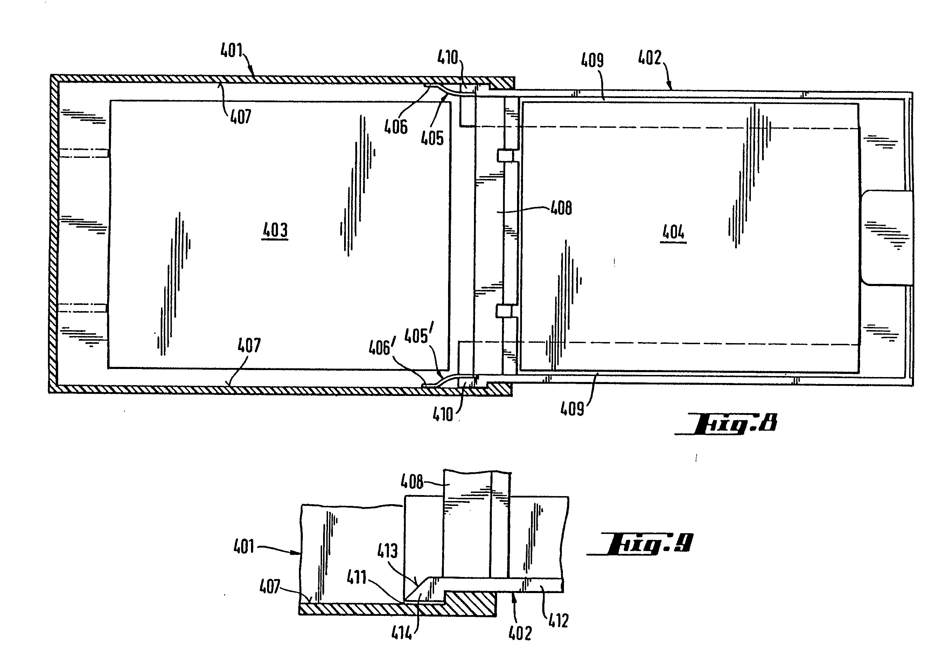

Fig. 5, 6 and 7 refer to a second embodiment. Housing 301 is provided with window 302 and adapted to accommodate slider 303 which has separator bar 304 and grip member 305. It will be noted in Fig. 5 and 6 where the slider is completely withdrawn that the picture stack 306 has been retracted from the housing by means of the slider with one picture 307 left in the housing.

Slider 303 accommodates leaf springs 308 adapted to urge the picture stack against the window 302 when the slider is pushed home. In its extracted position, the pictures will not be ejected by springs 308 because a protruding edge 309 of grip member 305 and the housing front edge act as stop means (cf. Fig. 6).

Within housing 301 and mounted on the bottom thereof, there are two pairs of double leaf springs 311 and 312, respectively. In plan view, each spring 312 has symmetric U-shape and each spring 311 has asymmetric U-shape, i.e. its inner leg is slightly shorter than its outer leg. With the slider pushed home (Fig. 7), all legs of all springs are depressed by slider struts 310. Upon withdrawal thereof, the free ends of the leaf springs will yield as shown in Fig. 6, the individual spring legs performing the following functions:

The external or outer legs 311', 312' extend immediately aside of the edges of picture 307 so to align it properly, and there will be no interference because the spring legs yield already during slider withdrawal, picture 307 being held during the slider stroke clamped between the picture stack 306 and retention means 314. Spring legs 312'' engage under picture 307 so to lift its rear edge in front of stop members 313, and spring legs 311'' slightly lift the picture front edge to a level where it will be properly presented for engagement by the rear bevel of separator bar 304.

Fig. 8 illustrates a further embodiment. Housing 401 and slider 402 are generally similar to the embodiments already described. A separated picture 403 lies in the housing, and a stack of pictures 404 is indicated in dashed lines in the slider. Adjacent the inner end of slider 402, at steps 410 of slider struts 409, each a leaf spring 405, 405' respectively is mounted, the free ends 406, 406' respectively of the leaf springs being biased to engage the inner surface 407 of the housing side walls. Thus, the separated picture 403 will be guided by means of the "funnel" formed by springs 405, 405' over separator bar 408 upon the inward stroke of slider 402.

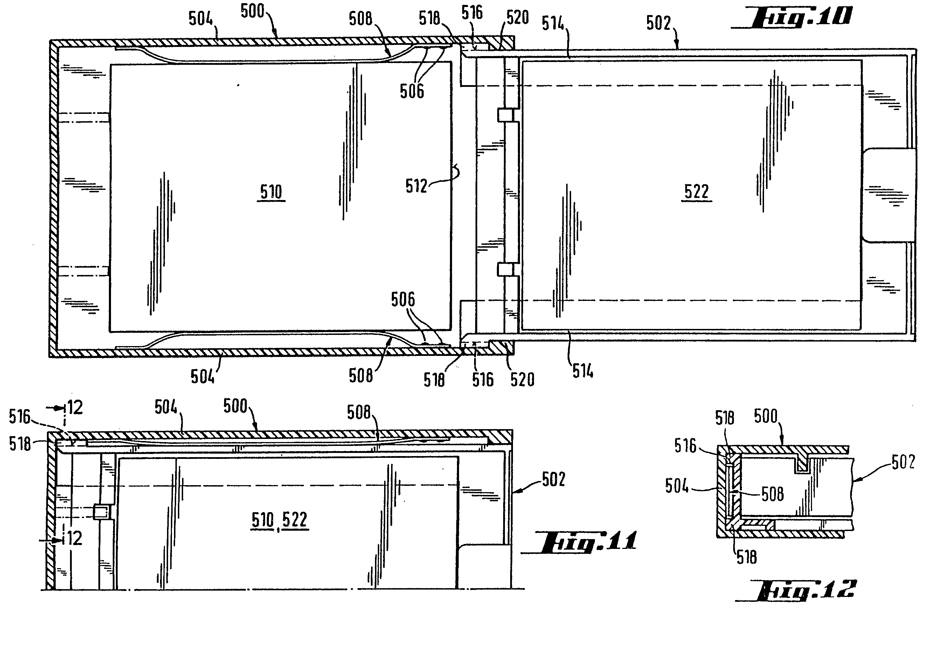

A modification is illustrated in Fig. 9 where simply the free ends of the slider struts 412 are chamfered so to form a bevel 413. However, because of the necessary clearance 411 between the housing and the slider, there will remain a certain risk that under adverse circumstances, a corner of the separated picture will be engaged by the tip 414 with the result of malfunction of the picture viewer causing even damage to the picture.

The embodiment illustrated in Fig. 10, 11, and 12 comprises, again, a housing 500 and a slider 502. The configuration of both members is similar to that of the embodiments already described so that only the modifications need be explained. At lateral walls 504 of housing 500 there are mounted, e.g. by means of rivets 506, as shown, leaf springs 508 which, in their relaxed status, assume the shape illustrated in Fig. 10 so to laterally engage the edges of the separated picture 510. Thus, upon pushing inwards of the slider, the leading edge 512 of picture 510 is perfectly aligned with the struts 514 of slider 502.

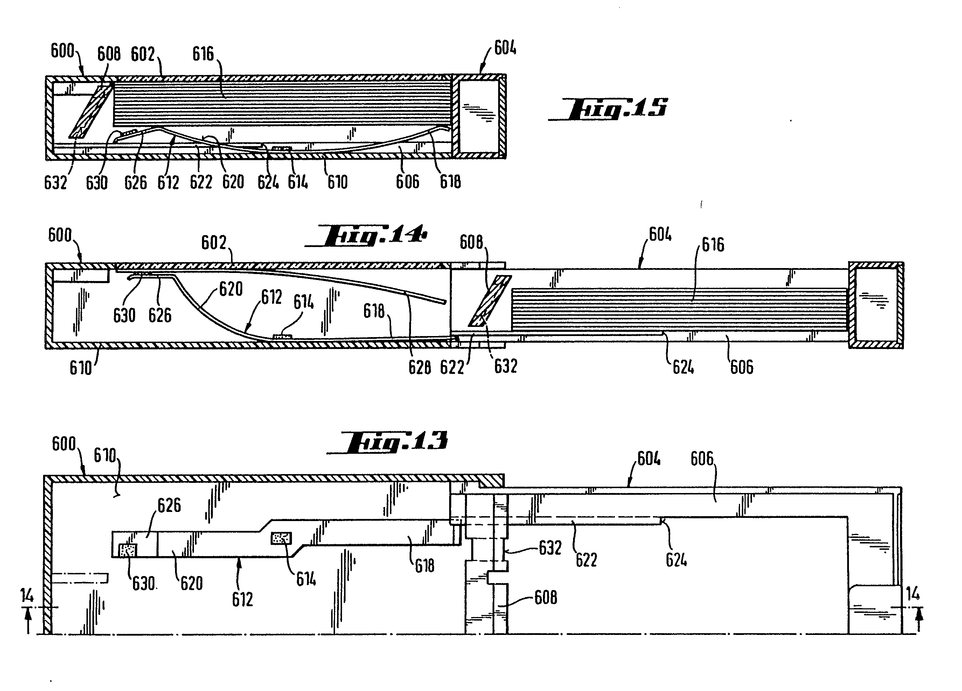

With the slider 502 pushed home, springs 508 are depressed by the slider struts which are provided with grooves 516 adapted to accommodate the springs, as may be best seen in Fig. 12. The inward ends of slider struts 514 have laterally outwards protruding stop portions 518 adapted to cooperate with counter stops 520 provided at housing 500 adajcent its opening.

The stack of pictures 522 is indicated in dashed lines in Fig. 10.

In the embodiments so far described, the separated picture is laterally engaged and guided. The last embodiment, on the contrary, is based on the principle that the separated picture is clamped when the slider is withdrawn.

In the illustrations of Fig. 13, 14, and 15, the retentive element is not illustrated, because it is extensively explained in the publications referred to above.

The picture viewer of Fig. 13—15 is of the same general configuration as the other embodiments, in that a housing 600 has a viewing window 602 and a slider 604 has a frame-like structure with longitudinal struts 606 joined at their inner ends by separator bar 608. On the housing bottom 610, a pair of leaf springs 612 is mounted; as may be best seen in Fig. 14 and 15, housing bottom 610 has integrally formed therewith inwardly protruding extensions 614 on which respective apertures provided about in the center of each leaf spring can be set, the free end of the extensions thereafter being deformed. The free ends of the leaf springs 612 produce a bias to urge the stack of pictures 616 against window 602 (Fig. 15). The front end 618 of each leaf spring is offset outwards with respect to mounting point 614 while the rear ends 620 are offset inwards with respect thereto (Fig. 13). From slider struts 606, skids 622 extend inwards in overlapping relation with spring ends 618 upon withdrawal of the slider so that these spring ends are depressed (Fig. 14) but skids 622 are cut off at 624 so that with the slider pushed home, spring ends 618 may yield.

Rear spring ends 620 have a distal portion 626 bent such that, with the stack of pictures carried away by separator bar 608 upon withdrawal of the slider (Fig. 14), the one picture separated from the stack by the retentive element is clamped between this distal portion 626 and the window. In order to safely hold the separated picture 628 a pad 630 of high friction is disposed on distal portion 626. The pad does not assume the full width of leaf spring end 620 because it would then interfere with separator bar 608 upon reciprocation of the slider which, nevertheless, must be able to depress leaf spring end 620 so that it can engage under picture stack 616. Thus, clearance for pad 630 is provided by a respective indentation 632 of separator bar 608, this indentation being sufficiently narrow to permit depression of the rear leaf spring end 620 by the portion of the separator bar immediately adjacent to it.

## Claims

1. A picture viewer, comprising
— a housing member (100, 202, 301, 401, 500, 600) adapted to accommodate a stack of pictures of substantially equal size, the housing having a top wall provided with a viewing window, a bottom wall opposite said top wall, side walls, a rear wall and an open front side,
— a slider member (102, 201, 303, 402, 502, 604) adapted to slide through said open housing front side parallel to said viewing window,
— bias means mounted in one of said members adapted to urge at least one of said pictures against said viewing window,
— and picture exchange means comprising a separator bar extending parallel to said open housing side in one of said members and adapted to engage those edges of said pictures which extend parallel thereto, and comprising further a retentive element in the other of said members adapted to engage a picure at one end of said stack,
whereby, upon withdrawal of said slider member out of said housing member, said one picture is seaparated from said stack and, upon a return stroke of said slide member, is joined to the stack again at the other end thereof, said separator bar thereby guiding said one picture across said stack, characterized in that aligning means (extension of 105, 203, 311'/312', 406/406', 508,626) are provided in at least one of said members and are adapted to retain said one separated picture in alignment with said stack when said slider member is withdrawn.

2. A picture viewer as set forth in claim 1 characterized in that said alignment means comprises surface portions adapted to engage those edges of said one separated picture which extend parallel to the slider member reciprocation direction.

3. A picture viewer as set forth in claim 2 wherein said slider member is of substantially frame-like structure having lateral struts extending in direction of its reciprocation movement, said struts being joined adjacent to an inner end of said slider member by said separator bar, characterized in that said struts (105) extend beyond said separator bar so to engage with the slider member withdrawn said parallel edges of said one separated picture adjacent its transverse edge facing said separator bar.

4. A picture viewer as set forth in claim 2 wherein said slider member is of substantially frame-like structure having lateral struts extending in direction of its reciprocation movement, said struts being joined adjacent an inner end of said slider by said separator bar, characterized in that leaf springs (405, 405) are provided at said struts beyond said separator bar and shaped to define a channel along which said one separated picture is guided upon a slider member return stroke.

5. A picture viewer as set forth in claim 3 characterized in that extension members (203) are provded slidable relative to said struts, stop means being provided at said housing member so to define an extended position of said extension members, and stop means being provided at said slider member so to define a retracted position of said extension members which assume said extended and retracted positions respectively with the slider member being withdrawn and pushed home, respectively.

6. A picture viewer as set forth in claim 2 characterized in that said surface portions are provided as spring members adapted to assume a picture edge engaging configuration when said slider member is withdrawn.

7. A picture viewer as set forth in claim 6 characterized in that said spring members are adapted to be depressed by said slider member upon the latter being pushed home into said housing member.

8. A picture viewer as set forth in claim 7 characterized in that said spring members comprise leaf springs.

9. A picture viewer as set forth in claim 8 characterized in that said leaf springs are mounted in that one of the housing or slider member which carries said retentive element.

10. A picture viewer as set forth in claim 1, characterized in that the aligning means comprises clamping means (620, 626, 630) adapted to frictionally hold said one separated picture in alignment with said stack when said slider member is withdrawn.

11. A picture viewer as set forth in claim 10, characterized in that said clamping means is adapted to hold said one separated picture clamped against said one viewing window.

12. A picture viewer as set forth in claim 11 wherein said bias means comprise substantially arc-shaped leaf springs extending substantially parallel to the direction of slider reciprocation and having each a front end and a rear end adapted to urge overlying pictures against said viewing window, characterized in that said clamping means are provided at at least one end of each leaf spring end.

**Patentansprüche**

1. Ein Bildbetrachter, umfassend

— ein Gehäuseteil (100, 202, 301, 401, 500, 600), ausgebildet zum Aufnehmen eines Stapels von Bildern im wesentlichen gleicher Größe, wobei das Gehäuse eine mit einem Sichtfenster versehene Deckwandung, eine der Deckwandung gegenüberliegende Bodenwandung, Seitenwandungen, ein Rückwandung und eine offene Frontseite aufweist,

— ein Schieberteil (102, 201, 303, 402, 502, 604), ausgebildet zum Gleiten durch die genannte offene Gehäusefrontseite parallel zu dem genannten Sichtfenster,

— in einem der Teile montierte Vorspannmittel, ausgebildet zum Andrücken mindestens eines der genannten Bilder gegen das genannte Sichtfenster,

— und Bildwechselmittel, umfassend einen Separatorsteg, der sich parallel zu der genannten offenen Gehäuseseite in einem der Teile erstreckt und ausgebildet ist zum Erfassen jener Kanten der genannten Bilder, die sich parallel dazu erstrekken, und umfassend ferner ein Halteelement im anderen der genannten Teile, ausgebildet zum Erfassen eines Bildet an einem Ende des genannten Stapels,

derart, daß bei Herausziehen des genannten Schieberteils aus dem genannten Gehäusteil das genannte eine Bild von dem genannten Stapel abgetrennt wird und bei einem Rückhub des genannten Schieberteils dem Stapel an dessen anderer Seite wieder zugefügt wird, wobei der genannte Separatorsteg das genannte eine Bild quer zu dem genannten Stapel führt, dadurch gekennzeichnet, daß Ausfluchtmittel (Verlängerung von 105, 203, 311'/312', 406/406', 508, 626) in mindestens einem der genannten Teile vorgeshen sind und ausgebildet sind zum Halten des genannten abgetrennten Bildes in Ausfluchtung mit dem genannten Stapel, wenn das genannte Schieberteil herausgezogen ist.

2. Ein Bildbetrachter nach Anspruch 1, dadurch gekennzeichnet, daß die genannten Ausfluchmittel Oberflächenabschnitte umfassen, ausgebildet zum Erfassen jener Kanten des genannten einen abgetrennten Bildes, die sich parallel zu der Richtung der Hin- und Herbewegung des Schieberteils erstrecken.

3. Ein Bildbetrachter nach Anspruch 2, bei dem das genannte Schieberteil im wesentlichen rahmenartiger Struktur ist mit seitlichen Holmen, die sich in Richtung seiner Hin- und Herbewegung erstrecken, welche Holme nahe einem inneren Ende des genannten Schieberteils durch den genannten Separatorsteg verbunden sind, dadurch gekennzeichnet, daß die genannten Holme (105) sich über den genannten Separatorsteg hinaus erstrecken, um so bei herausgezogenem Schieberteil die genannten parallelen Kanten des genannten einen abgetrennten Bildes nahe seiner Querkante, die dem genannten Separatorsteg zugewandt ist, zu erfassen.

4. Ein Bildbetrachter nach Anspruch 2, bei dem das genannte Schieberteil im wesentlichen rahmenartiger Struktur ist, mit seitlichen Holmen, die sich in Richtung seiner Hin- und Herbewegung erstrecken, welche Holme nahe einem inneren Ende des genannten Schiebers durch den genannten Separatorsteg verbunden sind, dadurch gekennzeichnet, daß Blattfedern (405, 405') an den genannten Holmen jenseits des genannten Separatorstegs vorgesehen sind und geformt sind zum Begrenzen eines Kanales, längs welchem das genannte eine abgetrennte Bild bei einem Schieberteilrückkehrhub geführt wird.

5. Ein Bildbetrachter nach Anspruch 3, dadurch gekennzeichnet, daß Verlängerungsteile (203) gleitbeweglich relativ zu den genannten Holmen vorgesehen sind, wobei Anschlagmittel an dem genannten Gehäuseteil so vorgesehen sind, daß sie eine ausgefahrene Position der genannten Verlängerungsteile definieren und Anschlagmittel an dem Schieberteil so vorgesehen sind, daß sie eine eingezogene Position der genannten Verlängerungsteile definieren, welche die jeweilige ausgefahrene bzw. eingezogene Position annehmen, wenn das Schieberteil herausgezogen bzw. eingeschoben ist.

6. Ein Bildbetrachter nach Anspruch 2, dadurch gekennzeichnet, daß die genannten Oberflächenabschnitte als Federteile vorgesehen sind, ausgebildet zum Annehmen einer eine Bildkante erfassenden Konfiguration, wenn das genannte Schieberteil herausgezogen ist.

7. Ein Bildbetrachter nach Anspruch 6, dadurch gekennzeichnet, daß die genannten Federteile ausgebildet sind, um durch das genannte Schieberteil niedergedrückt zu werden bei Einschub des letzteren in das gennante Gehäuseteil.

8. Ein Bildbetrachter nach Anspruch 7, dadurch gekennzeichnet, daß die genannten Federteile Blattfedern umfassen.

9. Ein Bildbetrachter nach Anspruch 8, dadurch gekennzeichnet, daß die genannten Blattfedern in jenem Teil von Gehäuse oder Schieberteil montiert sind, welches das genannte Halteelement trägt.

10. Ein Bildbetrachter nach Anspruch 1, dadurch gekennzeichnet, daß die Ausfluchtmittel Klammermittel (620, 626, 630) umfassen, ausgebildet zum reibungsschlüssigen Halten des genannten einen abgetrennten Bildes in Ausfluchtung mit dem genannten Stapel, wenn das genannte Schieberteil herausgezogen wird.

11. Ein Bildbetrachter nach Anspruch 10, dadurch gekennzeichnet, daß die genannten Klammermittel ausgebildet sind zum Halten des genannten einen abgetrennten Bildes geklemmt gegen das genannte Sichtfenster.

12. Ein Bildbetrachter nach Anspruch 11, bei dem die genannten Vorspannmittel im wesentlichen bogenförmige Blattfedern umfassen, die sich im wesentlichen parallel zur Richtung der Schieberhin- und -herbewegung erstrecken und jeweils ein Frontende und ein rückwärtiges Ende haben, ausgebildet zum Andrücken darüberliegender Bilder gegen das genannte Sichtfenster, dadurch gekennzeichnet, daß die genannten Klammermittel an zumindest einem Ende jedes Blattfederendes vorgesehen sind.

**Revendications**

1. Un appareil de présentation d'images comprenant:

— un élément de boîtier (100, 202, 301, 401, 500, 600) adapté pour recevoir une pile d'images de taille pratiquement égale, le boîtier ayant une paroi supérieure munie d'une fenêtre de projection, un paroi de fond opposée à ladite paroi supérieure, des parois latérales, une paroi arrière, et une paroi avant ouverte,

— un élément coulissant (102, 201, 303, 402, 502, 604) destiné à coulisser à l'intérieur dudit côté avant ouvert du boîtier, parallèlement à ladite fenêtre de projection,

— un moyen de poussée monté dans l'un desdits éléments et adapté pour pousser au moins l'une desdites images contre ladite fenêtre de projection,

— et un moyen de permutation des images comprenant une barre de séparation s'étendant parallèlement audit côté ouvert de boîtier dans l'un desdits éléments, et destiné à venir en contact avec ceux des bords desdites images qui s'étendent parallèlement à celui-ci et comprenant en outre un élément de freinage dans l'autre desdits éléments, destiné à venir en contact avec une image à une extrémité de ladite pile, de telle façon que lors du retrait dudit élément coulissant hors dudit élément de boîtier, une desdites images est séparée de ladite pile et, lors de la course de retour dudit élément coulissant, est de nouveau réunie à la pile, à l'autre extrémité de celle-ci, ladite barre de séparation guidant ainsi une desdites images, à travers ladite pile, caractérisé en ce que des moyens d'alignement (en prolongement de 105, 203, 311'/312', 406/406', 508, 626) sont ménagés dans au moins un desdits éléments et sont destinés à retenir une desdites images séparées en alignement avec ladite pile, lorsque ledit élément coulissant est tiré.

2. Un appareil de présentation d'images selon la revendication 1, caractérisé en ce que ledit moyen d'alignement comprend des portions de surface destinées à venir en contact avec ceux des bords de l'une desdites images séparée qui s'étend parallèment à la direction de va-et-vient dudit élément coulissant.

3. Un appareil de présentation d'images selon la revendication 2, dans lequel ledit élément coulissant présente une structure pratiquement analogue à un châssis, ayant des entretoise latérales s'étendant en direction de son mouvement de va-et-vient, lesdites entretoises étant réunies, en étant adjacentes à une extrémité interne dudit élément coulissant, par la barre de séparation, caractérisé en ce que lesdites entretoises (105) s'étendent au-delà de la barre de séparation, de manière à venir en prise avec l'élément coulissant sorti desdits bords parallèles de l'une desdites images séparées, adjacente à son bord transversal et en regard de ladite barre de séparation.

4. Un appareil de présentation d'images selon la revendication 2, dans lequel ledit élément coulissant est une structure essentiellement en forme de châssis, ayant des entretoises latérales s'étendant en direction de son mouvement de va-et-vient, lesdites entretoises étant réunies, en étant adjacentes à une extrémité intérieure dudit élément coulissant, par ladite barre de séparation, caractérisé en ce que des lames de ressort (405, 405') sont fixées auxdites entretoises, au-delà de ladite barre de séparation, et conformées de manière à définir une rainure le long de laquelle ladite image séparée est guidée pendant la course de retour de l'élément coulissant.

5. Un appareil de présentation d'images selon la revendication 3, caractérisé en ce que les éléments de prolongement (203) sont montés coulissants par rapport auxdites entretoises, des moyens de butée étant ménagés sur l'élément de boîtier, de manière à définir une position étendue desdits éléments de prolongement, et des moyens de butée étant montés sur ledit élément coulissant, de manière à délimiter une position rétractée desdits éléments de prolongement, qui assure lesdites positions détendue et rétractée desdits éléments de prolongement qui prennent respectivement lesdites positions étendue et rétractée avec l'élément coulisssant respectivement tiré et repoussé dans son logement.

6. Un appareil de présentation d'images, selon la revendication 2, caractérisé en ce que lesdites portions de surface sont identiques à des éléments à ressort adaptés pour que le bord d'une image soit en position d'engagement lorsque ledit élément coulissant est tiré.

7. Un appareil de présentation d'images selon la revendication 6, caractérisé en ce que lesdits éléments à ressort sont destinés à être comprimés par ledit élément coulissant lorsque ce dernier est poussé à l'intérieur dudit élément de boîtier.

8. Un appareil de présentation d'images selon la revendication 7, caractérisé en ce que lesdits éléments à ressort sont des ressorts à lame.

9. Un appareil de présentation d'image selon la revendication 8, caractérisé en ce que les lames de ressort sont montées dans l'un des éléments de boîtier ou coulissant qui porte l'élément de freinage.

10. Un appareil de présentation d'images selon la revendication 1, caractérisé en ce que les moyens d'alignement comprennent des moyens de serrage (620, 626, 630) destinés à maintenir à friction l'une desdites images séparée en alignement avec ladite pile lorsque ledit élément coulissant est tiré.

11. Un appareil de présentation d'images selon la revendication 10, caractérisé en ce que lesdits moyens de serrage sont destinés à maintenir l'une desdites images séparée, coïncée contre la fenêtre de projection.

12. Un appareil de présentation d'images selon la revendication 11, dans lequel lesdits moyens de poussée comprennent des lames de ressort sensiblement en forme d'arc de cercle, s'étendant pratiquement parallèlement à la direction de va-et-vient de l'élément coulissant et ayant chacun une extrémité avant et une extrémité arrière, destiné à pousser lesdites images qui se chevauchent contre ladite fenêtre de projection, caractérisé en ce que lesdits moyens de serrage sont ménagés à au moins une extrémité de chaque extrémité des lames de ressort.

Fig.1 / Fig.2

Fig.4

Fig.3

313 307 302 304 306 309 305
311' 311
312" 312' 312 311"
301 308 303

**Fig.6**

312' 312 301 311' 311 308 303

**Fig.5**

VII
312"
313
VII 311"
6 6
314 304
309
313 305
312" 311"
310
312' 312 307 311' 311 308 306 310

301 302 304
311
310
311' 311"

**Fig.7**

Fig. 8

Fig. 9

_Fig:10_

_Fig:11_

_Fig:12_

0 113 057

*Fig.15*

*Fig.14*

*Fig.13*

0 113 057